# EUROPEAN PATENT APPLICATION

(11) **EP 1 072 303 A1**
(43) Date of publication of application: **31.01.2001**
(21) Application number: 99810688.4
(22) Date of filing: 29.07.1999
(51) Int. Cl.: B01D 59/34

(54) **Highly selective molecular laser isotope separation, particularly of carbon 13**

(71) Applicant: ECOLE POLYTECHNIQUE FEDERALE DE LAUSANNE, 1015 Lausanne (CH)
(72) Inventor: Boiarkine, Oleg, 1022 Chavannes (CH); Rizzo, Thomas, 1135 Denens (CH)
(74) Representative: Cronin, Brian Harold John

(57) **Abstract**

A method of separating isotopes from polyatomic molecules, in particular ¹³C from trifluoromethane HCF₃, by applying to the polyatomic molecules in the gas phase infrared laser beams of different frequencies to produce multiphoton dissociation and reaction resulting in separable isotopes. The first laser has a frequency and a energy fluence to produce vibrationally preexcited molecules enriched in the desired isotope, for instance ¹³C. The second laser has a frequency and energy fluence to selectively induce dissociation of the vibrationally preexcited molecules by infrared multiphoton excitation. The product of the pressure of the molecules and the time-delay of the second laser pulse relative to the first allows collisional vibrational deactivation of a substantial amount of the vibrationally preexcited molecules containing non-desired isotope(s), like ¹²C, before dissociation of the vibrationally excited molecules occurs, while there is no significant collisional vibrational deactivation of preexcited molecules containing the desired isotope, like ¹³C. The dissociation products are hence highly enriched in the desired isotope. The laser beams are collimated or slightly diverging or slightly converging beams of low fluence (≤5 J/cm²) substantially overlapping with one another.

## Description

### Field of the Invention

This invention relates to the separation of a desired isotope from polyatomic molecules containing different isotopes, by applying to the molecules in the gas phase at a predetermined pressure, infrared radiation of a first pulsed laser and, after a predetermined time-delay, infrared radiation of a second pulsed laser of different frequency to produce a chemical reaction resulting in a molecule, enriched in the desired isotope, which can be separated from the remainder of the material. The invention is exemplified in particular by the separation of ¹³C isotopes in polyatomic molecules consisting of mostly ¹²C isotopes and which contain C-H and C-F bonds.

### Background of the Invention

The stable ¹³C isotope has been widely used in many applications, but until recently in relatively small volume. Recent medical development of the so called carbon-13 Diagnostic Breath Test (¹³C DBT) (US Patent 4 830 010) has dramatically changed the situation. The DBTS are used to assess the condition of organs of the human digestive system. Because of its safety, relative simplicity and wide range of application, the DBT technology has quickly spread world-wide.

A limiting factor for the increase of DBT is the relatively high production cost of highly (>99%) isotopically pure ¹³C. The bulk of the ¹³C at present is produced by multi-cycle low temperature distillation of CO. This technique is well developed and has nearly reached the maximum of its efficiency, limited by its high energy consumption.

The molecular laser isotope separation (MLIS) approach proves to be a promising alternative for production of high purity stable isotopes. The most developed method for MLIS of ¹³C is based on infrared multiphoton dissociation (IRMPD) of CF₂HCl by a pulsed CO₂ laser. This method relies on a 20 cm⁻¹ isotopic shift in the IR absorption spectrum of the ¹³C containing molecules relative to ¹²C for selective absorption and dissociation of ¹³CF₂HCl, which has a natural abundance of 1.1% concentration. The CF₂ dissociation fragments recombine, resulting in stable C₂F₄ molecules which are separated from parent molecules by cryogenic distillation.

One example of a recent implementation of this approach by Ivanenko et al. (Applied Physics B, 62, pp. 329-332, 1996) produces a macroscopic enrichment of ¹²C using a high-power high repetition rate industrial CO₂ laser. A report by V. Y. Baranov et al, (Proceedings of International Conference on Lasers 96, pp. 26-37, 1996) describes a pilot plant in Kaliningrad, Russia which is designed to produce several tens of kilograms of isotopically pure ¹³C a year. In both cases, CF₂HCl is enriched to 30-50% of ¹³C by selective IRMPD. Further enrichment up to 99% is accomplished by means of conventional centrifugal isotope separation.

Although the selective IRMPD approach is relatively simple and productive, it has severe drawbacks when applied for high purity isotope separation (>99%) required for medical applications. Because of the rich rotational structure of polyatomic molecules like CF₂HCl, the IR absorption spectra of ¹²C and ¹³C isotopic species are partially overlapped at room temperature. In the specific case of CF₂HCl, this overlap limits maximum possible enrichment in laser separation process to about 50% in a single step. To reach 99% isotopic enrichment, either conventional methods need to be used or the laser separation process has to be repeated after the partially enriched product (C₂F₄) is chemically converted to a molecule suitable for the next MLIS cycle. This complicates the overall process and significantly increases cost of the product.

Another problem is more general. It is well known that IRMPD of ground state molecules is highly nonlinear and occurs efficiently only when the fluence/intensity of the dissociating radiation exceeds a threshold value. For CF₂HCl this value is 10-15 J/cm². To achieve this fluence the CO₂ laser beam has to be sharply focused, and this limits the irradiated volume and, hence, productivity of the process.

US Patent 4 461 686 relates to two-color IR-IR MLIS wherein a first laser excites a non-specified vibrational state and a second laser excites molecules up to a level of a chemical conversion, including dissociation, with a time delay that is shorter than the vibrational relaxation time but longer than the rotational relaxation time of the polyatomic molecules, allowing time for rotational but not for vibrational relaxation. The described method uses focussed beams.

This method has been successfully realized on a laboratory scale by the group of Letokhov (Appl. Phys. B36, 93, 1985). However, these results also demonstrate the limitations of the isotopic enrichment and productivity of this approach.

US Patent 4 519 882 specifically highlights the difficulties of known multiphoton excitation methods, including the need to sharply focus the laser beam, and proposes to avoid these difficulties by using a one-photon excitation which is claimed to be more highly selective than multiphoton excitation.

### Summary of the Invention

One object of the invention is to provide an infrared multiphoton dissociation process for isotope separation that can produce an isotopically highly enriched species in a single pass.

A further object of the invention is to provide an infrared multiphoton dissociation process for isotope separation that can operate with low fluence laser beams enabling interaction by multiphoton dissociation over a large volume.

According to the invention, these objects are achieved by the method as set out in claim 1.

In this method, the radiation of the first laser has a predetermined frequency and a predetermined energy fluence to excite by a single photon a low overtone transition of a vibration of the polyatomic molecules, in particular a hydrogen stretch vibration, to produce vibrationally preexcited molecules enriched in the desired isotope, for instance ¹³C.

The radiation of the second laser has a predetermined frequency and predetermined energy fluence to selectively induce dissociation in the vibrationally preexcited molecules by infrared multiphoton excitation, in particular of a C-F stretch vibration.

The product of the pressure of the molecules and the length and/or time-delay of the second laser pulse relative to the first laser pulse, is sufficiently high to allow collisional vibrational deactivation of a substantial amount of the vibrationally preexcited molecules containing non-desired isotope(s), like ¹²C, before dissociation of the vibrationally excited molecules occurs while having no significant collisional vibrational deactivation of the preexcited molecules containing the desired isotope, like ¹³C. The dissociation products are hence highly enriched in the desired isotope.

Moreover, the first and second laser beams are collimated or slightly diverging or slightly converging beams of low fluence (≤5 J/cm²) overlapping with one another over a substantial portion or all of their respective volumes containing the said polyatomic molecules. The first and second beams can have an angle of divergence/convergence less than 2.0x10⁻³ rad.

The method according to the invention is particularly advantageous for separating ¹³C isotopes from polyatomic molecules consisting of mostly ¹²C isotopes and which contain C-H and C-F bonds, for example molecules of the formula HCF₂X, where X is F, Cl, B or I.

In one example, the molecules are trifluoromethane HCF₃, the frequency of the first laser is 8753±1 cm⁻¹ or 8549±1 cm⁻¹, the frequency of the second laser is in the range 1020-1070 cm⁻¹, the predetermined energy fluence of the first laser is in the range 0.5-5 J/cm², preferably 0.5-2 J/cm², and the predetermined energy fluence of the second laser has a value in the range 0.5-5 J/cm² depending on the pulse shape of the second laser. Alternatively, for trifluoromethane HCF3, the frequency of the first laser is 5936.5±1 cm⁻¹ or 5681±1 cm⁻¹. In this example, the molecules can be cooled down as low as their boiling point prior applying to said molecules radiation of the first laser.

Alternatively, the molecules are monofluoromethane CH₃F.

The first predetermined frequency can be produced by stimulated Raman scattering of narrowband tunable radiation of a solid state pulsed laser and the second predetermined frequency is produced by a pulsed CO₂ laser.

The method of the invention can also be applied to the separation of isotopes from other molecules including SiH₄, SiCl₃H, GeH₄, UF₆, and alcohols of the formula R-OH, where R=CH₃, C₂H₅, C₃H₇ or C₄H₉.

The overlapping first and second laser beams can be substantially parallel, or can multiple intersect.

### Brief Description of Drawings

In the drawings, given by way of example:
Fig. 1 is an energy level schematic for the isotope separation method according to the invention;
Fig. 2 is a diagram of an apparatus used to carry out the isotope separation method according to the invention;
Fig. 3 shows a typical mass-spectrum of C₂F₄ products enriched with ¹³C isotopes by the method according to the invention;
Fig. 4 shows the concentration of ¹²C and ¹³C in the C₂F₄ dissociation product obtained in an experimental setup, as a function of the pressure at zero time delay; and
Fig. 5 shows the concentration of ¹²C and ¹³C in the C₂F₄ dissociation product and the percentage of ¹³C in the C₂F₄ dissociation product as a function of time-delay between the overtone excitation laser pulse and the CO₂ laser pulse.

### Detailed Description

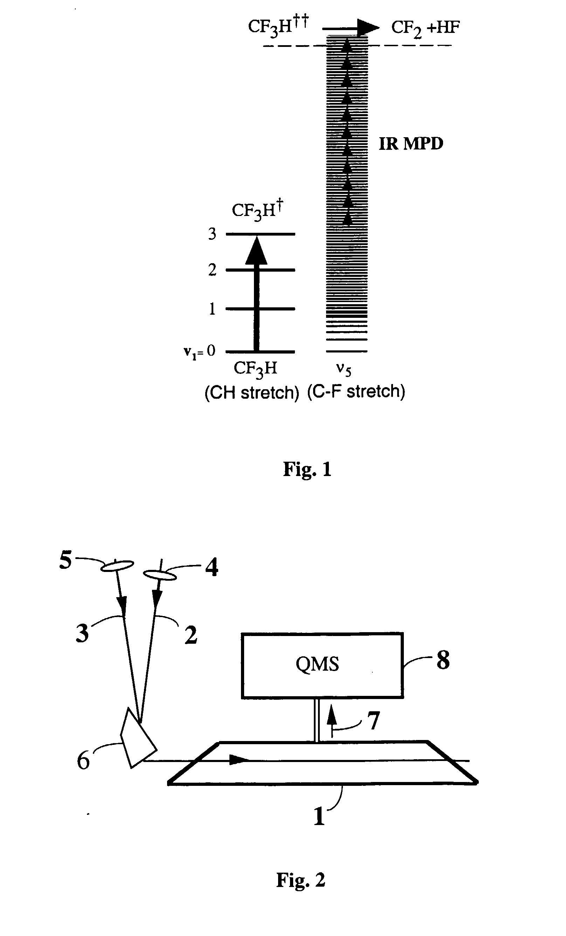

The method according to the invention comprises two steps, as shown schematically in Fig. 1 for the CF₃H molecule. In the first step, a near-infrared laser pulse pre-excites molecules containing the desired isotope via a low (Δv = 2 or 3) vibrational overtone transition of the CH stretch vibration. Following this, a CO₂ laser pulse excites a C-F stretch of only the pre-excited, isotopically selected molecules, to selectively dissociate them by IRMPD, producing CF₂ + HF. The isotopically selected CF₂ radicals are collected as C₂F₄ in the same manner as in the single laser dissociation of CF₂HCl.

Using a narrow bandwidth continuously tunable laser for pre-excitation, we can choose the excitation frequency to be in exact resonance with an overtone transition of the desired isotopic species, provided the rotational structure of the overtone band is at least partially resolved. Even if the isotopic spectral shift is relatively small, given sufficient resolution it is possible to find parts of the spectrum where there is a minimum of overlap.

This pre-excitation usually produces at least 80% ¹³C isotopes and at most 20% ¹²C isotopes, possibly about 90% ¹³C isotopes and about 10% ¹²C isotopes.

The second laser beam is arranged with a pulse length and/or delay relative to the first laser beam sufficient to allow a substantial amount of vibrationally excited molecules containing ¹²C to relax before dissociation, while leaving a substantial amount of the molecules containing ¹³C excited, enabling an enrichment to >95% and possibly to >99% ¹³C isotopes in a single pass.

This approach has several important advantages over other implementations of other IRMPD isotope separation schemes. First, vibrational overtone excitation with a continuously tunable laser can reach the maximum selectivity determined by the overlap in the spectra of two isotopic species, while conventional line-tunable CO₂ lasers cannot be sure to hit the point of minimum spectral overlap. Secondly, overtone pre-excitation of a light atom stretch vibration can promote molecules directly to the vibrational quasicontinuum where IRMPD by a CO₂ laser pulse is greatly facilitated. This allows use of an unfocussed CO₂ laser beam leading to interaction with a larger number of molecules. Moreover, since the vibrational energy of these pre-excited molecules is well defined, the parameters of the dissociating laser need only be optimized for this energy, preserving the isotopic selectivity gained in the first step.

Taken together, these factors indicate that the overtone excitation-IRMPD scheme according to the invention should provide a more efficient and selective means of laser isotope separation than previously developed MLIS schemes. The results described below demonstrate that this is indeed the case.

Exemplary of this new approach for isotope separation, trifluoromethane, CF₃H, is used as the parent molecule for ¹³C isotope separation. Trifluoromethane was chosen for the following reasons:
(1) It has an IR active light atom vibration associated with the carbon atom (¹³C-H stretch, υ₁=3025.3 cm⁻¹), through which a substantial amount of vibrational energy can be deposited into a molecule via a low overtone transition. The isotopic red shift in the 3υ₁ band of 39.7 cm⁻¹, is appreciable.
(2) It has another IR active vibration with a fundamental frequency shifted to the high frequency side of a conventional CO₂ laser (¹³C-F stretch, υ₅=1132.4 cm⁻¹). One can expect that the optimum frequency for IRMPD of vibrationally excited molecules lies within tuning range of CO₂ laser.
(3) Highly selective detection of vibrationally pre-excited molecules by IRMPD has been successfully implemented for studying the overtone spectroscopy of several species including CF₃H. See for example papers by Boyarkin/Settle/Rizzo in Ber. Bunseges. Phys. Chem. 99, 504 (1995) and by Boyarkin/Rizzo in J. Chem. Phys. 105, 6285 (1996).
(4) The lowest dissociation channel for CF₃H produces CF₂ and HF. Because the CF₂ fragment is the same as that from the IRMPD of CF₂HCl, we can take advantage of the large body of work on CF₂ collection in this highly studied system.

Fig. 2 schematically illustrates an experimental apparatus, comprising a cylindrical glass cell 1 filled with CF₃H to a specific pressure. A first preexcitation laser beam 2 and a second CO₂ dissociation laser beam 3 are delivered respectively via a glass lens 4 and an ZnSe lens 5 associated with an adjustable iris to a BaF₂ Pellin-Broca prism 6 and into the cell 1. Samples are probed from the cell 1 at 7 for analysis in a quadrupole mass spectrometer QMS 8.

Using the apparatus of Fig. 2, a 25 mJ laser pulse 2 at ∼1.14 µm, generated by Raman shifting a 90 mJ dye laser pulse in high pressure H₂, excites ¹³CF₃H molecules in cell 1 via the Q-branch of the 3υ₁ band. The pressure of the CF₃H sample in cell 1 was 7.5 mbar, the time-delay between the pre-excitation and dissociation laser pulses 2,3 was 75 ns, and the CO₂ laser fluence of beam 3 was adjusted to 2.5 J/cm². After a 10 minute irradiation time, the gas in the reaction cell 1 was sampled at 7 and the relative concentrations of the C₂F₄ dissociation products with different carbon isotopes measured in quadrupole mass spectrometer 8.

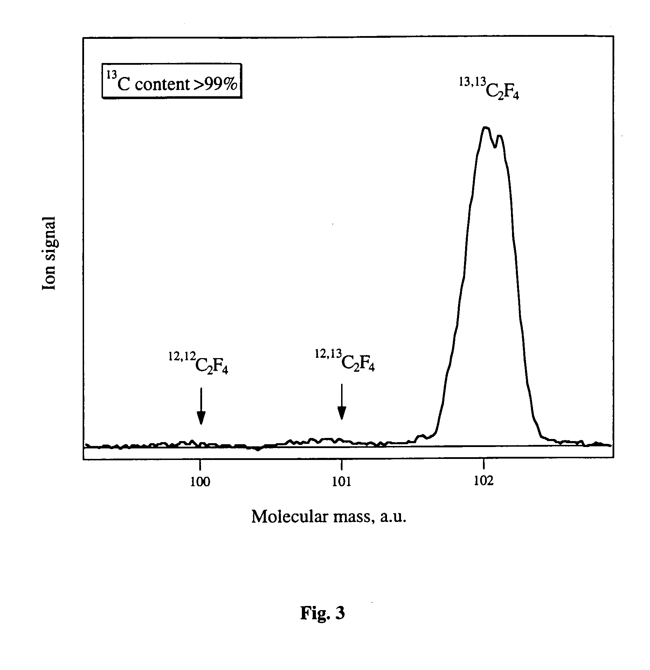

Fig. 3 shows a typical mass-spectrum of C₂F₄ products generated after 10 minutes irradiation time with the lasers operating at 10 Hz repetition rate. It can be seen that the observed ratio of signals at masses 100-102 corresponds to C₂F₄ product with >99% ¹³C. Together with a dissociation yield of 1.5-3%, these results represent a record in ¹³C performance by MLIS.

There are several important implications of these results:
(1) The process can be performed at relatively high gas pressure under collisional conditions that can substantially increase isotopic selectivity of the process.
(2) Effective dissociation occurs at relatively low, 2-3 J/cm², CO₂ laser fluence, avoiding the need to focus the CO₂ laser beam. This permits a great increase of the irradiated volume, since collimated beams can be propagated together for meters, limited only by the beam divergence.
(3) The high degree of enrichment is achieved in a single stage process, eliminating the need for either traditional methods or subsequent stages of laser separation.

The described method enables the production of ¹³C with more than 99% isotopic purity. The required enrichment is achieved in a single stage process. The possibility to work with two just collimated beams allows a great increase of irradiated volume and, hence, an increase of overall productivity of the process. This can make the process economically feasible and competitive with the current technologies.

The following Example illustrates experiments underlying the invention and its implementation on laboratory scale.

### Example

As shown schematically in Fig. 2, a cylindrical glass sample cell 1 (2 cm in diameter, 50 cm long) fitted with BaF₂ windows is filled with CF₃H gas to a specific pressure as measured by a capacitor manometer. In the first step of this process, a 20-25 mJ pre-excitation laser pulse 2 promotes molecules to the second overtone of the υ₁, (CH stretch) vibration in CF₃H. This pulse 2 has a duration of 5-6 ns and is produced by stimulated Raman scattering (first Stokes line) using a 90 mJ pulse from a Nd:YAG pumped dye laser (Spectra Physics GCR-270, Lumonics HP 500) in a cell containing 30 Bar of H₂. The frequency of this laser is tuned to the Q-branch of the 3υ₁ band in ¹³CF₃H (8753 cm⁻¹). The pre-excitation laser pulse 2 is focused into the center of the cell 1 by F=+120 cm lens 4, giving an estimated 1-2 J/cm² maximum fluence at the beam waist.

After a fixed delay, a pulse 3 from the CO₂ laser (Lumonics, TEA-850) arrives and selectively dissociates only the vibrationally excited molecules to produce CF₂ and HF. This beam 3 is first truncated to a size of 5-10 mm diameter by passing it through an adjustable iris and then focused by a F=+75 cm lens 5 to 2x2 mm² beam waist. Its fluence can be varied over a wide range. This pulse consists of a peak of 150 ns FWHM followed by a 2-3 µsec tail carrying more than 60% of the total pulse energy. The two laser beams 2,3 (i.e. the pre-excitation laser and CO₂ laser) are combined on a 10 mm thick BaF₂ Pellin-Broca prism 6 and enter the cell 1 from the same side.

The CF₂ dissociation products eventually recombine to form C₂F₄. The relative concentrations of the C₂F₄ with different carbon isotopes are measured in quadrupole mass-spectrometer 8 at atomic masses 100 (¹²C₂F₄), 101 (¹²CF₂¹³CF₂) and 102 (¹³C₂F₄). The productivity of the process for ¹³C is determined as twice the integral of the signal at mass 102 plus the integral of signal at mass 101. Correspondingly, the productivity of ¹²C is twice the integral of the signal at mass 100 plus the integral of signal at mass 101. The percentage of ¹³C is determined as a ratio of the ¹³C productivity to the total productivity of the process.

Fig. 3 represents a typical mass-spectrum of C₂F₄ products generated by infrared multiphoton dissociation (IRMPD) of room temperature CF₃H molecules vibrationally pre-excited to the second CH stretch overtone, using the apparatus of Fig. 2. The pressure of the CF₃H sample is 7.5 mbar, the time-delay between the end of the pre-excitation pulse 2 and the beginning of the CO₂ laser pulse 3 is 75 ns, and the CO₂ laser fluence is adjusted to 2.5 J/cm². The spectrum has been obtained after 10 min irradiation of the sample in static cell with the lasers operating at 10 Hz laser repetition rate. The observed ratio of MS signals at masses 100-102 corresponds to about 99%.¹³C concentration in the C₂F₄ product. The estimated dissociation yield for each pair of laser pulses is 1.5-3% of all ¹³CF₃H molecules within the irradiated volume.

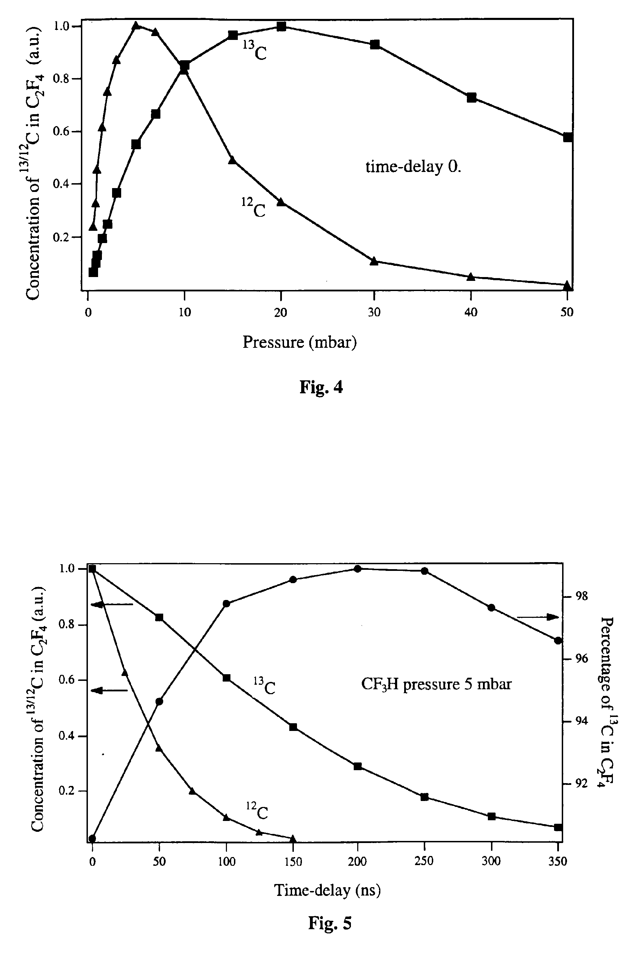

The importance of collisional vibrational deactivation of CF₃H molecules pre-excited to the 3υ1 level is illustrated by Figs. 4 and 5.

Fig. 4 represents the pressure dependence of the concentration of ¹²C (triangles, left hand scale; experiment (a)) and ¹³C (squares, left hand scale; experiment (b)) in the C₂F₄ dissociation product. In experiment (a) the wavelength of the first laser was tuned such that the amount of preexcited ¹²CF₃H at 10 mbar is about the same as the amount of preexcited ¹³CF₃H in experiment (b) at 10 mbar.

The experiments of Fig. 4 have been performed at zero time-delay between the two laser pulses and with a CO₂ laser fluence of 7 J/cm². All other parameters are as indicated above. One can see that the peak concentration of ¹²C and ¹³C in the C₂F₄ occurs at different pressure, and this is a result of more rapid collisional vibrational deactivation of the pre-excited ¹²CF₃H as compared to ¹³CF₃H during the CO₂ laser pulse. The total number of the pre-excited molecules grows linearly with pressure, but competition with collisional deactivation reduces the number of pre-excited CF₃H that can be dissociated at a given fluence of the CO₂ laser. As a result, the amount of C₂F₄ produced initially increases with increasing pressure but then drops. The rate of this drop is different for different carbon isotopes.

Fig. 5 shows the concentration of ¹²C (triangles, left hand scale; experiment (a)) and ¹³C (squares, left hand scale; experiment (b)) in the C₂F₄ dissociation product and the percentage of ¹³C in the C₂F₄ dissociation product (circles, right-hand scale; experiment (b)) as a function of time-delay between the overtone excitation laser pulse and the CO₂ laser pulse. In experiment (a) the wavelength of the first laser was tuned such that about the same amount of ¹²CF₃H was preexcited as the amount of ¹³CF₃H in experiment (b). Because these measurements are made in two different experiments, the percentage of ¹³C cannot simply be calculated from the concentrations of both isotopes shown in the Figure.

Fig. 5 illustrates the productivity for the two isotopes and the percentage of ¹³C in the C₂F₄ product as a function of the time-delay between the two laser pulses at 5 mBar CF₃H pressure and CO₂ laser fluence of 3.5 J/cm⁻¹. It is clear that the percentage of ¹³C in C₂F₄ grows with increasing the delay up to about 200 ns - that is with increasing the number of vibrationally deactivating collisions. One can see that because of this deactivation, the total amount of produced C₂F₄ drops as a function of time delay, but it does so at different rates for the two different isotopes of carbon.

Thus, both the final percentage of ¹³C in the C₂F₄ product and the productivity of the ¹³C separation process can be controlled by the parameter P·Δt, where P is CF₃H pressure and Δt is a time between the pre-excitation by the first laser pulse and the dissociation during the second laser pulse. This implies a time-delay between the two laser pulses and an effective duration of the dissociating pulse (i.e., the time the pulse is on before dissociation, which we have determined to be about 35 ns for the CO₂ laser pulse shape used here). Production of C₂F₄ highly enriched in ¹³C therefore requires this parameter, P·Δt, to be large enough for near all of vibrationally pre-excited ¹²CF₃H to be collisionally deactivated. For a quantitative estimate of the optimal parameter P·Δt, values for the vibrational deactivation constants from the 3υ₁ level have been determined experimentally to be about ¹³K₃=1.5 µs·mbar and ¹²K₃=4.5 µs·mbar for ¹³CF₃H and ¹²CF₃H respectively.

Another aspect of the invention illustrated by this example is the relatively low fluences of the pump and the dissociating radiation required for the process to be highly selective while retaining a reasonably high level of productivity. This permits the use of collimated rather than focussed laser beams, provided the pulse energies of two lasers are high enough. This allows the volume in which both laser energy fluences are in the optimal range to be much larger than what can be achieved with focused beams.

The difference between collimated and focussed beams is illustrated as follows. Suppose the pre-excitation laser delivers 0.5 J pulse energy in an about 8 mm beam with divergence 2·10⁻³. This gives an energy fluence of about 1 J/cm². This can be achieved, for example, by stimulated Raman scattering of output of an alexandrite solid state laser in high pressure H₂. A dissociating beam of the same diameter and divergence and with 2-3 J/cm² energy fluence can be produced by a TEA CO₂ laser. These two beams can be overlapped for a length of up to 3.3 meters before the fluences will drop to a half of their initial values because of divergence. This gives about a 0.25 liter irradiated volume where the process occurs. After each pass, the beams can be slightly recollimated and sent again to the reactor to increase the active volume by several times. This can be compared with a typical active volume of a few mm³ achieved in experiments with focused laser beams. Thus, the low laser fluences required for the described process allows irradiation of large volumes by collimated beams which dramatically increases of productivity of the process.

## Claims

1. A method of separating a desired isotope from polyatomic molecules containing different isotopes, by applying to said molecules in the gas phase at a predetermined pressure infrared radiation of a first pulsed laser and, after a predetermined time-delay, infrared radiation of a second pulsed laser of different frequency to produce a chemical reaction resulting in a molecule, enriched in the desired isotope, which can be separated from the remainder of the material, wherein:
- the radiation of the first laser has a predetermined frequency and a predetermined energy fluence to excite by a single photon a low overtone transition of a vibration of said molecules to produce vibrationally preexcited molecules enriched in the desired isotope;
- the radiation of the second laser of a predetermined frequency and predetermined energy fluence selectively induces dissociation in the vibrationally preexcited molecules by infrared multiphoton excitation;
- the product of the pressure of the molecules and the length and/or time-delay of the second laser pulse relative to the first laser pulse, is sufficiently . high to allow collisional vibrational deactivation of a substantial amount of the vibrationally preexcited molecules containing non-desired isotope(s) before dissociation of the vibrationally excited molecules occurs while having no significant collisional vibrational deactivation of the preexcited molecules containing the desired isotope, whereby the dissociation products are highly enriched in the desired isotope; and
- the first and second laser beams are collimated or slightly diverging or slightly converging beams of low fluence (≤5 J/cm²) overlapping with one another over a substantial portion or all of their respective volumes containing the said polyatomic molecules.

2. The method of claim 1 for separating ¹³C isotopes from polyatomic molecules consisting of mostly ¹²C isotopes and which contain C-H and C-F bonds.

3. The method of claim 2, wherein the molecules are of the formula HCF₂X, where X is F, Cl, B or I.

4. The method of claim 2, wherein the molecules are trifluoromethane HCF₃, the predetermined frequency of the first laser is 8753±1 cm⁻¹ or 8549±1 cm⁻¹, the predetermined frequency of the second laser is in the range 1020-1070 cm⁻¹, the predetermined energy fluence of the first laser is in the range 0.5-5 J/cm², and the predetermined energy fluence of the second laser is in the range 0.5-5 J/cm².

5. The method of claim 2, wherein the molecules are trifluoromethane HCF₃ and the predetermined frequency of the first laser is 5936.5±1 cm⁻¹ or 5681±1 cm⁻¹.

6. The method of claim 3 or 4, wherein the said molecules are cooled down as low as their boiling point prior applying to said molecules radiation of the first laser.

7. The method of claim 2, wherein the molecules are monofluoromethane CH₃F.

8. The method of claim 4, wherein the first laser produces at least 80% of pre-excited molecules containing ¹³C and at most 20% of pre-excited molecules containing ¹²C and the pressure of the molecules and the length and/or time-delay of the second laser pulse relative to the first laser pulse is sufficient to achieve reaction products enriched to >95% in ¹³C isotopes for each pair of the laser pulses.

9. The method of claim 8, wherein the first laser produces about 90% of pre-excited molecules containing ¹³C and at most 10% of pre-excited molecules containing ¹²C and the product of the pressure of the molecules and the length and/or time-delay of the second laser pulse relative to the first laser pulse is sufficient to achieve reaction products enriched to >99% in ¹³C isotopes for each pair of the laser pulses.

10. The method of claim 4, wherein the first predetermined frequency is produced by stimulated Raman scattering of narrowband tunable radiation of a solid state pulsed laser.

11. The method of claim 4, wherein the second predetermined frequency is produced by a pulsed CO₂ laser.

12. The method of claim 1, wherein the first and second lasers beams have an angle of divergence/convergence less than 2.0x10⁻³ rad.

13. The method of claim 1, wherein the molecules are selected from SiH₄, SiCl₃H, GeH₄, UF₆ and alcohols of the formula R-OH where R=CH₃, C₂H₅, C₃H₇ or C₄H₉.
